# FASCICULE DE BREVET EUROPEEN

(11) **EP 4 045 382 B1**
(45) Date de publication et mention de la délivrance du brevet: **23.08.2023**
(21) Numéro de dépôt: 20808178.6
(22) Date de dépôt: 14.10.2020
(51) Int. Cl.: B62B 5/00, B62B 1/14, B62K 11/00

(54) **DISPOSITIF DE TRANSPORT DE CHARGE DE TYPE DIABLE A ASSISTANCE ELECTRIQUE FACILEMENT ASSEMBLABLE ET COMMANDABLE**
LEICHT ZU MONTIERENDE UND ZU STEUERNDE ELEKTRISCH UNTERSTÜTZTE SACKWAGENARTIGE LASTENTRAGENDE VORRICHTUNG
ELECTRICALLY ASSISTED SACK TROLLEY-TYPE LOAD CARRYING DEVICE WHICH IS EASY TO ASSEMBLE AND CONTROL

(30) Priorité: 15.10.2019 FR 1911464
(43) Date de publication de la demande: 24.08.2022
(73) Titulaire: Rodallec, Marc, 29120 Combrit (FR)
(72) Inventeur: Rodallec, Marc, 29120 Combrit (FR)
(74) Mandataire: Brender, Paul-Jérémy
(86) Numéro de dépôt international: PCT/FR2020/051815
(87) Numéro de publication internationale: WO 2021/074523

(56) Documents cités:
- WO-A1-2018/096175
- CN-U- 204 529 227
- US-A1- 2018 141 609
- US-A1- 2018 319 455

## Description

La présente invention concerne un dispositif permettant l'assistance électrique d'une structure de transport de type diable et un dispositif de transport de charge de type diable à assistance électrique facilement assemblable et démontable.

Les diables électriques disponibles sur le marché actuel sont chers, environ 4 à 5000 €, leur poids environ 70 kgs, les rend inutilisables par des livreurs aux camions dépourvus de hayon, leur entretien nécessite souvent une intervention chez le constructeur. Les diables électriques existant ne sont pas adaptés aux petits livreurs, ni aux particuliers, ou pour une utilisation ponctuelle.

Concernant l'état de la technique on peut en particulier citer les demandes de brevet suivantes : WO014131896, WO018118856, US5685385, FR3053302, WO2018096175, US2018141609, US2018319455, CN204529227.

Le présent dispositif vise aussi à bénéficier d'une structure de transport de charges facilement démontable, légère facilement transportable et apte à être rangé. L'avantage essentiel du présent dispositif est que le gyropode n'est nullement altéré ou transformé et garde toutes ses qualités intrinsèques. Tous types d'utilisations pour le transport de charges peuvent être envisagés avec ce dispositif, en particulier un usage pour les plaisanciers fréquentant les ports, pontons, cales pentues, permettant de transporter des charges jusqu'à leurs embarcations de manière aisée, pourra être envisagé.

Le dispositif selon l'invention permet de remédier aux inconvénients précités des dispositifs existants, il se compose selon une première caractéristique de deux platines (1) ajustables permettant de fixer une structure de transport de type diable sans roues (2) à un gyropode (3), des cales en caoutchouc fixées sous ces platines transfèrent le poids et la charge du diable au châssis du gyropode en évitant tout appui sur les contacteurs électriques situés sous les pédales du gyropode.

Les platines pourvues de butées réglables (4) au moins à l'une de leurs extrémités permettent de s'adapter aux différentes tailles de châssis de gyropode. Les butées ont pour but d'éviter toute translation du diable par rapport au gyropode lors de la prise d'une charge sur le tablier du diable.

Un système de sangles (5) permet de solidariser et désolidariser rapidement l'ensemble diable et platine du gyropode, ce système non destructif est très pratique en cas de problèmes d'encombrement et de transport, cela permet également de se servir du gyropode uniquement.

Les joues de la platine reçoivent une pièce mobile (6), mue par des systèmes de leviers de freins de vélo, câbles et gaines (7). La longueur du bras de levier de la pièce mobile, soit entre la fixation du câble et l'axe du pivot est telle qu'une faible pression exercée par l'utilisateur sur les leviers de frein suffit à créer une pression suffisante sur les contacteurs électrique du gyropode entrainant sa mise en marche, il suffit alors de pencher l'ensemble vers l'avant ou l'arrière pour obtenir un déplacement.

Un ressort de rappel (8) ramène la pièce mobile en position initiale dès le relâchement des leviers de freins, ce qui a pour effet d'arrêter le mouvement.

Un manche central amovible (9) fixé entre les deux autres manches du diable par étriers et contre plaque peut recevoir les deux leviers de freins et rendre ainsi l'ensemble pilotable par une personne handicapée ou accidentée d'un bras.

L'invention concerne un dispositif de solidarisation d'un gyropode (3) et d'une structure de transport de type diable (2) sans roues permettant la commande et l'actionnement dudit gyropode (3) pour le transport de charges qui est constitué d'au moins deux platines rigides (1) positionnables sur les deux espaces de commande du gyropode(3), habituellement actionnés par le poids de l'utilisateur par le biais de ses pieds, celles-ci étant maintenues sur le gyropode (3) par un système de fixations souples de type sangles (5) enserrant le gyropode (3), lesdites platines comportant des joues (11) permettant à chacune des platines d'être solidarisées, de manière fixe à la partie inférieure du diable, et de manière mobile à une pièce rigide (6), commandée en rotation (6) permettant la mise en pressior des espaces de commande du gyropode (3), des moyens d'actionnement (7) de chaque pièce rigide (6) commandée en rotation étant constitués de câbles actionnables depuis les poignées de la structure de transport aptes à exercer une force de traction sur la pièce rigide (6) pour commander sa rotation et la mise en pression des espaces de commande du gyropode (3) et de moyen de rappel de force, par exemple un ressort de rappel, liant la platine et la pièce rigide pour fournir une force de rappel opposée à la force de traction.

Dans un mode de réalisation préféré, le dispositif de solidarisation d'un gyropode et d'une structure de transport de type diable sans roues permettant la commande et l'actionnement dudit gyropode pour le transport de charges on prévoit que la pièce rigide (6) commandée en rotation est constituée d'une équerre dont une extrémité est solidarisée à une platine avec aptitude à être mise en rotation, l'autre extrémité comportant des moyens de fixation du câble de commande et d'une extrémité du moyen de rappel de force, le coin de l'équerre rigide venant en contact avec l'espace de commande pour la mise en pression.

De manière préférée, les parties inférieures des platines sont pourvues de moyen de calage souple (10), par exemple des cales en caoutchouc (10) permettant la reprise de charge sur le bâti du gyropode en évitant ainsi toute pression sur les contacteurs électriques du gyropode.

On peut prévoir des butées mobiles et réglables (4) sur les platines formant équerres sont garnies de cales en caoutchouc assurant la protection de la coque du gyropode (3).

Dans un mode de réalisation les moyens d'actionnement (7) des câbles comportent des leviers de commande solidarisés aux poignées, leur actionnement faisant coulisser les câbles au sein d'une gaine.

Un manche central amovible (9) sur la partie supérieure duquel les moyens d'actionnement peuvent être rapportés pourra être prévu pour permettre la manipulation de l'ensemble avec un seul bras.

De manière générale l'invention concerne aussi un dispositif de transport de charge à assistance électrique constitué d'un gyropode (3) portant un diable sans roues (2) et d'un dispositif de solidarisation et de commande.

L'invention a pour finalité de prévoir un ensemble permettant de transformer un gyropode (3) sans altération de celui-ci, en structure de transport de charge de type diable. En particulier on prévoit un ensemble permettant de transformer un gyropode (3) sans altération de celui-ci, en structure de transport de charge de type diable pour les plaisanciers et utilisateurs de zone portuaire (cales, pontons...), avec des parties mécaniques rigides qui ont subi un traitement anticorrosion ou sont constituées d'acier inoxydable. Les dessins annexés illustrent l'invention.

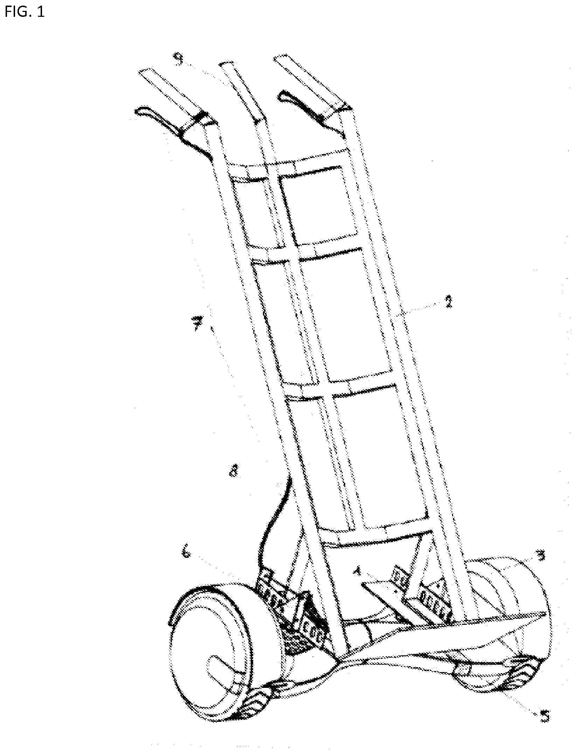

La figure 1 représente l'ensemble avec l'option commande centrale.

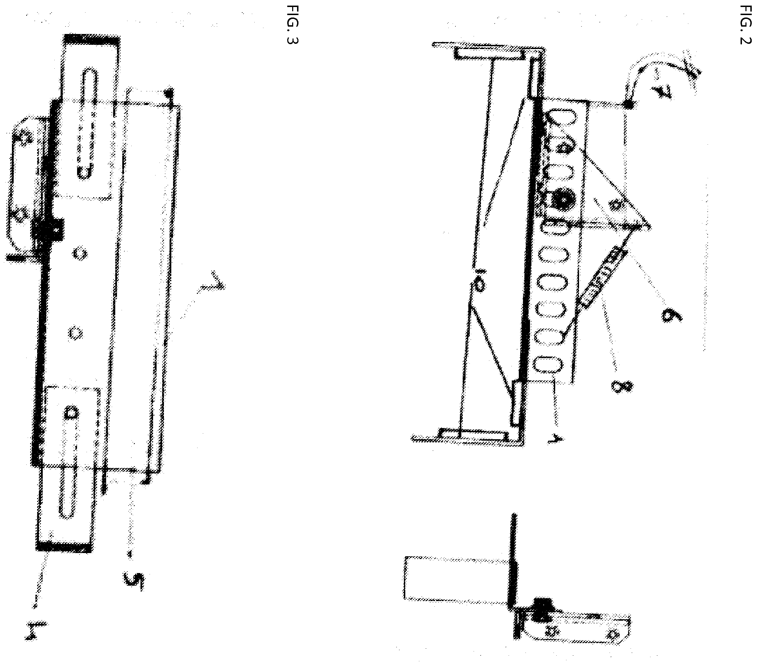

La figure 2 représente la platine et la pièce mobile vue de côté
La figure 3 représente la platine vue de dessus.

La réalisation du prototype ainsi que les améliorations apportées au cours des différents tests a démontré que ce diable était non seulement capable de monter une charge de 80 kgs sur une pente de 30% mais également de la descendre en toute sécurité grâce à la réversibilité des moteurs électriques du gyropode (tests réalisés sur la passerelle de pontons de port de plaisance).

Le gyropode utilisé pour les tests était doté de roues de 10 pouces, de deux moteurs électriques de 350 watts chacun, les données constructeurs lui confèrent une autonomie d'une vingtaine d'heures et une charge maxi de 120 kgs.

Les différentes pièces ont été réalisées en tôle galvanisée mais elles auraient pu l'être en aluminium ou matériaux composites.

Le dispositif selon l'invention est particulièrement destiné aux livreurs, artisans ou déménageurs ayant de plus en plus de difficultés à stationner en ville, mais aussi aux particuliers pour les mêmes raisons, sans oublier les plaisanciers ou professionnels ayant à armer ou avitailler les bateaux sur les pontons. Un gyropode tout terrain permettrait également une utilisation sur certains chantiers extérieurs.

Le prix public du diable et du système d'adaptation se situera aux alentours de 250 € auxquels il faut ajouter 200€ de gyropode, l'ensemble à moins de 500€ confère à ce système de transport un rapport utilisation / prix n'existant pas sur le marché.

Compte tenu de la facilité de réalisation et de la simplicité de l'assemblage ce système peut être produit en petites moyennes ou grandes séries par des PME spécialisées en serrurerie ou tôlerie et livré en kit ou pré monté.

## Revendications

1. Dispositif de solidarisation d'un gyropode (3) et d'une structure de transport de type diable (2) sans roues permettant la commande et l'actionnement dudit gyropode (3) pour le transport de charges **caractérisé en ce qu'**il est constitué d'au moins deux platines rigides (1) positionnables sur les deux espaces de commande du gyropode(3), habituellement actionnés par le poids de l'utilisateur par le biais de ses pieds, celles-ci étant maintenues sur le gyropode (3) par un système de fixations souples de type sangles (5) enserrant le gyropode (3), lesdites platines comportant des joues (11) permettant à chacune des platines d'être solidarisées, de manière fixe à la partie inférieure du diable, et de manière mobile à une pièce rigide (6), commandée en rotation (6) permettant la mise en pression des espaces de commande du gyropode (3), des moyens d'actionnement (7) de chaque pièce rigide (6) commandée en rotation étant constitués de câbles actionnables depuis les poignées de la structure de transport aptes à exercer une force de traction sur la pièce rigide (6) pour commander sa rotation et la mise en pression des espaces de commande du gyropode (3) et de moyen de rappel de force, par exemple un ressort de rappel, liant la platine et la pièce rigide pour fournir une force de rappel opposée à la force de traction.

2. Dispositif de solidarisation selon la revendication 1 **caractérisé en ce que** la pièce rigide (6) commandée en rotation est constituée d'une équerre dont une extrémité est solidarisée à une platine avec aptitude à être mise en rotation, l'autre extrémité comportant des moyens de fixation du câble de commande et d'une extrémité du moyen de rappel de force, le coin de l'équerre rigide venant en contact avec l'espace de commande pour la mise en pression.

3. Dispositif de solidarisation selon l'une des revendications précédentes **caractérisé en ce que** les parties inférieures des platines sont pourvues de moyen de calage souple (10), par exemple des cales en caoutchouc (10) permettant la reprise de charge sur le bâti du gyropode en évitant ainsi toute pression sur les contacteurs électriques du gyropode.

4. Dispositif de solidarisation selon l'une des revendications précédentes **caractérisé en ce que** des butées mobiles et réglables (4) sur les platines formant équerres sont garnies de cales en caoutchouc assurant la protection de la coque du gyropode (3).

5. Dispositif de solidarisation selon l'une des revendications précédentes **caractérisé en ce que** les moyens d'actionnement (7) des câbles comportent des leviers de commande solidarisés aux poignées, leur actionnement faisant coulisser les câbles au sein d'une gaine.

6. Dispositif de solidarisation selon l'une des revendications précédentes **caractérisé en ce qu'**il comporte un manche central amovible (9) sur la partie supérieure duquel les moyens d'actionnement peuvent être rapportés pour permettre la manipulation de l'ensemble avec un seul bras.

7. Dispositif de transport de charge à assistance électrique **caractérisé en ce qu'**il est constitué d'un gyropode (3) portant un diable sans roues (2) et d'un dispositif de solidarisation selon les revendications de 1 à 6.

8. Ensemble permettant de transformer un gyropode (3) sans altération de celui-ci, en structure de transport de charge de type diable, **caractérisé en ce qu'**il est constitué d'un dispositif de solidarisation selon l'une quelconque des revendication 1 à 6, et d'un diable sans roue.

9. Ensemble permettant de transformer un gyropode (3) sans altération de celui-ci, en structure de transport de charge de type diable pour les plaisanciers et utilisateurs de zones portuaires telles que des cales ou des pontons, **caractérisé en ce qu'**il est constitué d'un dispositif de solidarisation selon l'une quelconque des revendication 1 à 6, et d'un diable sans roue dont les parties mécaniques rigides ont subi un traitement anticorrosion ou sont constituées d'acier inoxydable.

## Patentansprüche

1. Vorrichtung zur festen Verbindung eines Gyropods (3) und einer Transportstruktur vom Typ Sackkarre (2) ohne Räder, welche die Steuerung und den Betrieb des Gyropods (3) für den Transport von Lasten ermöglicht, **dadurch gekennzeichnet, dass** sie aus mindestens zwei starren Platten (1) besteht, die auf den beiden üblicherweise durch das Gewicht des Benutzers mithilfe seiner Füße betätigten Steuerflächen des Gyropods (3) positioniert werden können, wobei diese auf dem Gyropod (3) durch ein System von flexiblen Befestigungen vom Typ Gurte (5) gehalten werden, die den Gyropod (3) umschließen. Diese Platten weisen Wangen (11) auf, dank derer jede Platte fest mit dem unteren Teil der Sackkarre und beweglich mit einem starren Teil (6) verbunden ist, das (6) drehgesteuert wird und die Druckbeaufschlagung der Steuerflächen des Gyropods (3) ermöglicht. Die Betätigungsvorrichtungen (7) jedes drehgesteuerten starren Teils (6) bestehen aus Kabeln, die von den Griffen der Transportstruktur aus bedient werden können und geeignet sind, eine Zugkraft auf das starre Teil (6), auszuüben, um seine Drehung und den Druckaufbau der Steuerflächen des Gyropods (3) zu steuern, sowie aus des Kraftrückstellmitteln, z. B. eine Rückzugfeder, welche die Platte und das starre Teil verbindet und eine der Zugkraft entgegengesetzte Rückzugskraft ausübt.

2. Vorrichtung zur festen Verbindung
nach Anspruch 1, **dadurch gekennzeichnet, dass** das drehgesteuerte starre Teil (6) aus einem rechten Winkel besteht, wobei ein Ende des Winkels fest mit einer Platte verbunden ist, die in Drehung versetzt werden kann, und das andere Ende Mittel zur Befestigung des Steuerkabels und eines Endes des Kraftrückstellmittels besitzt, wobei die Ecke des starren Winkels die Steuerfläche berührt, um den Druck aufzubauen.

3. Vorrichtung zur festen Verbindung
nach einem der vorhergehenden Ansprüche, **dadurch gekennzeichnet, dass** die unteren Enden der Platten mit flexiblen Keilen (10), z. B. aus Gummi (10) versehen sind, welche die Last auf dem Gestell des Gyropods aufnehmen können und verhindern, dass Druck auf die elektrischen Schalter des Gyropods ausgeübt wird.

4. Vorrichtung zur festen Verbindung
nach einem der vorhergehenden Ansprüche, **dadurch gekennzeichnet, dass** bewegliche und verstellbare (4) Anschläge auf den Winkelplatten mit Gummikeilen versehen sind, um das Gehäuse des Gyropods (3) zu schützen.

5. Vorrichtung zur festen Verbindung
nach einem der vorhergehenden Ansprüche, **dadurch gekennzeichnet, dass** die Vorrichtung zur Betätigung (7) der Kabel mit den Griffen fest verbundene Betätigungshebel besitzen, welche die Kabel in einer Ummantelung bewegen.

6. Vorrichtung zur festen Verbindung
nach einem der vorhergehenden Ansprüche, **dadurch gekennzeichnet, dass** sie einen abnehmbaren zentralen Griff (9) besitzt, auf dessen oberen Teil die Betätigungsmittel aufgesetzt werden können, um das Ganzen mit einem einzigen Arm betätigen zu können.

7. Lastentransportvorrichtung mit elektrischer Unterstützung, **dadurch gekennzeichnet, dass** sie aus einem Gyropod (3) besteht, der eine Sackkarre ohne Räder (2) trägt, und einer Vorrichtung zur festen Verbindung nach den Ansprüchen von 1 bis 6.

8. Baugruppe, die es ermöglicht, einen Gyropod (3) ohne Umbau desselben in eine Lastentransportstruktur vom Typ Sackkarre zu verändern, **dadurch gekennzeichnet, dass** sie aus einer Vorrichtung zur festen Verbindung nach einem der Ansprüche 1 bis 6 und einer Sackkarre ohne Räder gebildet wird.

9. Baugruppe, die es ermöglicht, einen Gyropod (3) ohne Veränderung desselben in eine Lastentransportstruktur vom Typ Sackkarre für Sportbootfahrer und Nutzer von Hafenbereichen wie Slipways oder Pontons umzubauen, **dadurch gekennzeichnet, dass** sie aus einer Vorrichtung zur festen Verbindung nach den Ansprüchen 1 bis 6 besteht und einer Sackkarre ohne Räder, deren starre mechanische Teile einer Korrosionsschutzbehandlung unterzogen wurden oder aus rostfreiem Stahl bestehen.

## Claims

1. Device for securing a self-balancing scooter {3) and a transport structure such as
a wheelless hand trolley (2) to control and operate said self-balancing scooter {3) for load transport purposes, **characterised in that** it comprises at least two hard plates (1) which can be placed on the self-balancing scooter's (3) two control areas, usually actuated by the operator's weight with their feet, these being secured to the self-balancing scooter {3) by a flexible clamping system such as straps (5) attached to the self-balancing scooter {3), said plates comprising flanges (11) whereby each plate can be secured in a stationary manner to the lower part of the hand trolley, and in a moving manner to a hard part {6), rotationally controlled {6) to pressurise the self-balancing scooter's (3) control areas, means for actuating (7) each rotationally controlled hard part {6) comprising cables that can be actuated by the transport structure handles able to apply a tensile force to the hard part {6) to control its rotation and pressurisation of the self-balancing scooter's (3) control areas and force restoring means, for example a valve spring, connecting the plate and hard part to provide a restoring force opposite to the tensile force.

2. Securing device
according to claim 1, **characterised in that** the rotationally controlled hard part {6) comprises a square having one end attached to a plate which can be rotated, the other end comprising control cable clamping means and an end piece of the force restoring means, the hard square corner abutting against the control area for pressurisation.

3. Securing device
according to one of the previous claims, **characterised in that** the lower parts of the plates have a flexible wedging means (10), for example rubber shims (10) for the load recovery on the self-balancing scooter frame, therefore avoiding any pressure on the self-balancing scooter's electric contact switches.

4. Securing device
according to one of the previous claims, **characterised in that** mobile stops (4) adjustable on the plates making up squares are lined with rubber shims to protect the self-balancing scooter {3) casing.

5. Securing device
according to one of the previous claims, **characterised in that** the cable actuation means (7) comprise control levers secured to the handles, their operation allowing the cables to slide inside a sheath.

6. Securing device
according to one of the previous claims, **characterised in that** it comprises a removable central handle {9) on the upper part of which the actuation means can be restored to allow handling of the assembly using one arm.

7. Power-assisted load transport device **characterised in that** it comprises a self-balancing scooter {3) bearing a wheelless hand trolley (2) and an attachment device 1 according to claims 1 to 6.

8. Assembly for converting a self-balancing scooter {3), without damaging it, into a hand trolley type load transport structure, **characterised in that** it comprises a securing device according to any one of claims 1 to 6, and a wheelless hand trolley.

9. Assembly for converting a self-balancing scooter {3), without damaging it, into a hand trolley type load transport structure for boaters and people using port areas such as slipways and pontoons, **characterised in that** it comprises a securing device according to any one of claims 1 to 6, and a wheelless hand trolley whose hard mechanical parts have been subjected to an anticorrosion treatment or are made of stainless steel.
